# FASCICULE DE BREVET EUROPEEN

(11) **EP 3 956 620 B1**
(45) Date de publication et mention de la délivrance du brevet: **13.11.2024**
(21) Numéro de dépôt: 20717885.6
(22) Date de dépôt: 14.04.2020
(51) Int. Cl.: F28D 7/00, F02C 7/14, F28F 1/26, F01D 25/26, F01D 9/06

(54) **ÉCHANGEUR DE CHALEUR AIR SECONDAIRE/FLUIDE, SON PROCÉDÉ DE FABRICATION ET TURBOMACHINE À DOUBLE FLUX ÉQUIPÉE DE CET ÉCHANGEUR**
BYPASS-LUFT-/FLUIDWÄRMETAUSCHER, VERFAHREN ZU SEINER HERSTELLUNG UND TURBOFANTRIEBWERK MIT EINEM SOLCHEN AUSTAUSCHER
BYPASS AIR/FLUID HEAT EXCHANGER, METHOD FOR MANUFACTURING SAME AND TURBOFAN ENGINE PROVIDED WITH SUCH EXCHANGER

(30) Priorité: 17.04.2019 FR 1904100
(43) Date de publication de la demande: 23.02.2022
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); METGE, Pierre Jean-Baptiste, 77550 MOISSY-CRAMAYEL (FR); CORSAUT, Alexandre, 77550 MOISSY-CRAMAYEL (FR); PIKOVSKY, Catherine, 77550 MOISSY-CRAMAYEL (FR)
(74) Mandataire: Regimbeau
(86) Numéro de dépôt international: PCT/EP2020/060449
(87) Numéro de publication internationale: WO 2020/212340

(56) Documents cités:
- US-A- 4 914 904
- US-A1- 2008 095 611
- US-A1- 2018 238 640

## Description

### DOMAINE DE L'INVENTION

La présente invention concerne un échangeur de chaleur air secondaire/fluide pour turbomachine à double flux, une telle turbomachine équipée de cet échangeur et le procédé de fabrication de cet échangeur.

### ETAT DE LA TECHNIQUE

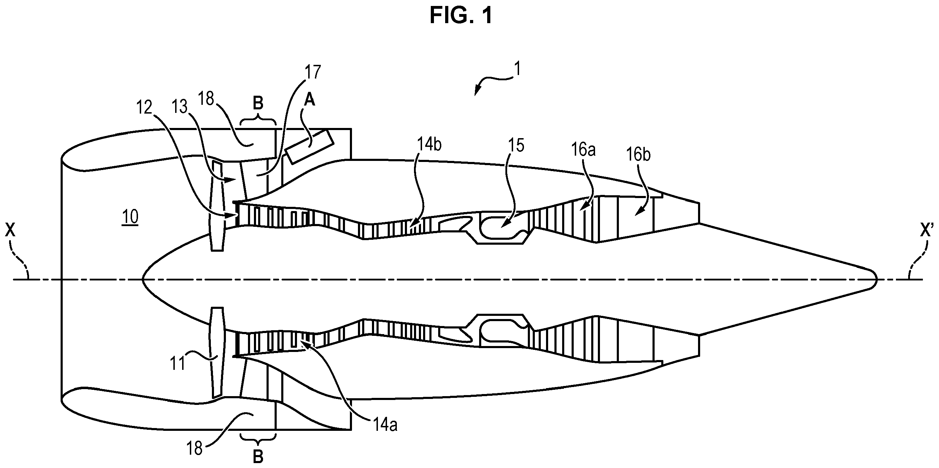

Pour mémoire, on rappellera ci-après brièvement la structure d'une turbomachine à double flux, en faisant référence à la figure 1 jointe.

Sur celle-ci, on peut voir une turbomachine 1 à double flux et à double corps avec successivement, dans le sens de circulation de l'air, c'est-à-dire de l'amont (à gauche sur la figure) vers l'aval (à droite sur la figure), une entrée d'air 10 et une soufflante 11, qui débite l'air d'une part dans une veine primaire 12 et d'autre part dans une veine secondaire 13. Par « veine », on entend le volume au travers duquel circule un flux d'air.

L'axe longitudinal de la turbomachine est référencé X-X'.

Le flux d'air circulant dans la veine primaire 12 traverse successivement un compresseur basse pression 14a, un compresseur haute pression 14b, une chambre de combustion 15, une turbine haute pression 16a et une turbine basse pression 16b.

Par ailleurs, le flux d'air secondaire qui circule dans la veine secondaire 13 est éjecté séparément à travers une tuyère de flux secondaire, après avoir traversé une série d'aubes directrices OGV 17, (OGV signifiant *"Outlet guide Vanes"*)*.*

Dans une turbomachine, les arbres tournants sont supportés par des paliers à billes ou à rouleaux. Ces paliers doivent être refroidis par de l'huile de lubrification pour maintenir leur intégrité mécanique car ils ne doivent pas être soumis à des températures supérieures à 150°C. En conséquence, l'huile qui ressort chaude après être passée dans le palier doit être refroidie avant de pouvoir être renvoyée de nouveau dans ce palier.

Il existe actuellement deux méthodes pour refroidir l'huile dans une turbomachine. Selon une première méthode, on utilise le carburant de la turbomachine comme fluide d'échange thermique avec l'huile. On envoie alors l'huile chaude dans un échangeur huile/carburant, afin de refroidir l'huile. Selon une deuxième méthode, on envoie l'huile dans un échangeur air/huile au niveau d'un des flux froids du moteur, afin de la refroidir. On connaît ainsi d'après le document FR 3 028 021, un échangeur de chaleur comprenant un dispositif muni de volets mobiles, qui est destiné à être fixé sur la face intérieure du carter externe délimitant la veine secondaire d'une turbomachine.

Cet échangeur de chaleur est ainsi fixé au niveau du repère A de la figure 1, c'est-à-dire à proximité de la tuyère de flux secondaire.

Or, les tendances de spécification sur les turbomachines vont vers l'augmentation des vitesses de rotation et des puissances mises en jeu, ce qui conduit à une augmentation du besoin de refroidissement de l'huile de lubrification. Il est donc nécessaire de refroidir un volume d'huile plus important ou d'améliorer encore son refroidissement et ce, sur des moteurs (turbomachines) déjà extrêmement contraints en encombrement et en masse.

En outre, l'introduction d'un échangeur de chaleur ne doit pas induire d'effets délétères sur l'aérodynamique de la turbomachine. Les échangeurs air/huile existants ont un encombrement radial et azimutal significatif et il serait donc souhaitable d'améliorer encore leur intégration dans la turbomachine.

On connaît également d'après le document US 4 914 904, un échangeur de chaleur air secondaire/huile de lubrification, qui comprend une virole externe à paroi double, une virole interne, une série d'aubes reliant ladite virole externe à ladite virole interne et un circuit de circulation de l'huile de lubrification à refroidir.

Toutefois, les orifices d'entrée et de sortie du circuit de circulation de l'huile sont disposés sur les aubes, ce qui rend leur accès difficile et peut même perturber l'aérodynamisme de la turbomachine. De plus, les différents composants de cet échangeur ne sont pas monoblocs, ce qui nécessite de les assembler en entraînant une augmentation du poids de l'ensemble.

### EXPOSE DE L'INVENTION

L'invention a donc pour but de proposer un échangeur de chaleur air/huile (et plus généralement air/fluide, ce fluide pouvant être n'importe quel fluide à refroidir circulant à l'intérieur de la turbomachine), qui :
- puisse être inséré dans l'espace contraint d'une turbomachine,
- n'augmente pas le poids de celle-ci de façon significative et,
- ne perturbe pas l'écoulement d'air à l'intérieur de la turbomachine.

A cet effet, l'invention concerne un échangeur de chaleur air secondaire/fluide pour turbomachine à double flux comprenant :
- une virole externe, annulaire, à deux parois, dites respectivement "intérieure" et "extérieure",
- une virole interne, annulaire, concentrique avec la virole externe,
- une série d'aubes directrices OGV qui relient ladite virole externe à ladite virole interne, au moins l'une desdites aubes directrices OGV possédant deux cloisons, dites respectivement "première cloison" et "seconde cloison qui se rejoignent à leurs extrémités amont respectives et à leurs extrémités aval respectives,
- et un circuit de circulation dudit fluide,
les deux viroles délimitant une veine de flux d'air secondaire, ledit circuit de circulation du fluide étant formé dans l'épaisseur de ladite virole externe entre sa paroi intérieure et sa paroi extérieure et dans l'épaisseur d'au moins l'une desdites aubes directrices OGV, ce circuit de circulation débouchant à ses deux extrémités respectives dans un orifice d'entrée et dans un orifice de sortie et l'échange de chaleur s'effectuant entre ledit fluide et l'air secondaire circulant dans la veine secondaire.

Conformément à l'invention, cet échangeur est fabriqué par fabrication additive, notamment par fabrication additive par fusion laser sur lit de poudre, les deux viroles, les aubes directrices OGV et le circuit de circulation dudit fluide sont monobloc, l'orifice d'entrée et l'orifice de sortie du circuit de circulation du fluide sont formés à travers ladite paroi extérieure de la virole externe, un séparateur intermédiaire fait saillie entre ces deux cloisons depuis la paroi extérieure de la virole externe, ce séparateur intermédiaire s'étendant des extrémités amont respectives de la première cloison et de la deuxième cloison jusqu'à leurs extrémités aval respectives et sur une hauteur inférieure à celle desdites cloisons, de façon à constituer une chicane qui permet de guider le flux de fluide circulant dans le circuit de circulation depuis un premier espace situé entre la paroi intérieure et la paroi extérieure de la virole externe, en amont de ladite aube directrice OGV, vers un deuxième espace ménagé entre la première cloison, et le séparateur intermédiaire, puis vers un troisième espace ménagé entre le séparateur intermédiaire et la seconde cloison et enfin vers une autre partie du premier espace située entre la paroi intérieure et la paroi extérieure de la virole externe, en aval de cette même aube directrice OGV, par rapport au sens de circulation du fluide dans ledit circuit de circulation dudit fluide et ce séparateur intermédiaire est monobloc avec la paroi extérieure de la virole externe.

Grâce à ces caractéristiques de l'invention, cet échangeur peut être inséré en lieu et place d'une partie du carter extérieur délimitant la veine secondaire, des aubes directrices OGV et du bec de séparation entre les flux d'air primaire et secondaire d'une turbomachine, puisque sa virole externe, sa virole interne et les aubes directrices permettent de canaliser le flux secondaire. De plus, du fait que le circuit de circulation du fluide à refroidir est formé directement dans l'épaisseur de la virole externe et des aubes directrices, ceci permet de l'intégrer dans un environnement contraint et de combiner la fonction de guidage du flux d'air secondaire et de refroidissement du fluide.

Cette intégration directe du circuit de circulation de fluide à l'intérieur des éléments dirigeant le flux d'air secondaire, permet de ne pas augmenter le volume et le poids de l'échangeur de chaleur et par là même celui de la turbomachine, et de ne pas perturber la circulation du flux d'air secondaire.

Enfin, le caractère monobloc des différentes parties de cet échangeur simplifie sa fabrication et diminue également son poids.

Selon d'autres caractéristiques avantageuses et non limitatives de l'invention, prises seules ou en combinaison :
- l'échangeur de chaleur comprend une pluralité d'ailettes de refroidissement qui font saillie depuis la paroi intérieure de la virole externe en direction de la virole interne, sur une partie seulement de la distance entre cette paroi intérieure et la virole interne, ces ailettes de refroidissement étant disposées sur au moins une portion de la circonférence de ladite paroi intérieure, entre les aubes directrices OGV et lesdites ailettes de refroidissement sont monobloc avec ladite paroi intérieure de la virole externe ;
- la première cloison et la seconde cloison des aubes directrices OGV et le séparateur intermédiaire sont incurvés par rapport à la direction axiale de l'échangeur ;
- l'échangeur de chaleur comprend au moins un premier trou dit « de dépoudrage » ménagé dans le séparateur intermédiaire au niveau du point de jonction de ce séparateur intermédiaire avec la paroi extérieure de la virole externe et les extrémités amont respectives de la première cloison et de la seconde cloison de l'aube directrice OGV et au moins un second trou dit de « dépoudrage » ménagé dans le séparateur intermédiaire au niveau du point de jonction de ce séparateur intermédiaire avec la paroi extérieure de la virole externe et les extrémités aval respectives de la première cloison et de la seconde cloison de l'aube directrice OGV ;
- les ailettes de refroidissement sont incurvées en direction axiale selon le même profil que les deux cloisons des aubes directrices OGV ;
- l'échangeur de chaleur comprend un bec de séparation annulaire monobloc avec l'extrémité amont circulaire de la virole interne et destiné à séparer le flux d'air secondaire et un flux d'air primaire circulant dans ladite turbomachine à double flux et ledit bec de séparation est creux et délimite un quatrième espace qui constitue une portion du circuit de circulation du fluide ;
- les deux extrémités amont et aval de la virole externe sont repliées vers l'extérieur de l'échangeur de façon à former une bride amont de fixation et une bride aval de fixation ;
- le fluide est de l'huile de lubrification.

L'invention concerne également une turbomachine à double flux. Conformément à l'invention, celle-ci comprend un échangeur de chaleur air secondaire/fluide tel que précité, la virole externe et la virole interne de cet échangeur de chaleur sont fixées respectivement à un carter externe et à un carter interne de ladite turbomachine qui ensemble délimitent la veine de flux secondaire de ladite turbomachine à double flux et l'orifice d'entrée et l'orifice de sortie du circuit de circulation du fluide sont raccordés à une source de fluide à refroidir de ladite turbomachine.

L'invention concerne enfin le procédé de fabrication de l'échangeur de chaleur air secondaire/fluide précité. Selon ce procédé, cet échangeur de chaleur air/fluide est fabriqué par fabrication additive par fusion laser sur lit de poudre.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est une vue en coupe axiale d'une turbomachine à double flux de l'état de la technique,
[Fig. 2] est une vue en perspective de l'échangeur de chaleur conforme à l'invention,
[Fig. 3] est une vue en coupe transversale de ce même échangeur, prise selon le plan matérialisé par l'indication P3 en figure 2,
[Fig. 4] est une vue de détail de la partie inférieure de la figure 3,
[Fig. 5] est une vue de détail de la partie inférieure de l'échangeur de la figure 2,
[Fig. 6] est une vue en coupe, partiellement axiale, de la partie supérieure de l'échangeur de la figure 2,
[Fig. 7] est une vue en perspective de la partie inférieure de l'échangeur,
[Fig. 8] est une vue en coupe axiale de la partie supérieure de l'échangeur de chaleur prise selon le plan de coupe matérialisée par le repère P8 sur la figure 2,
[Fig. 9] est une vue en coupe d'une aube directrice OGV prise selon le plan de coupe matérialisé par l'indication P9 en figure 4, et

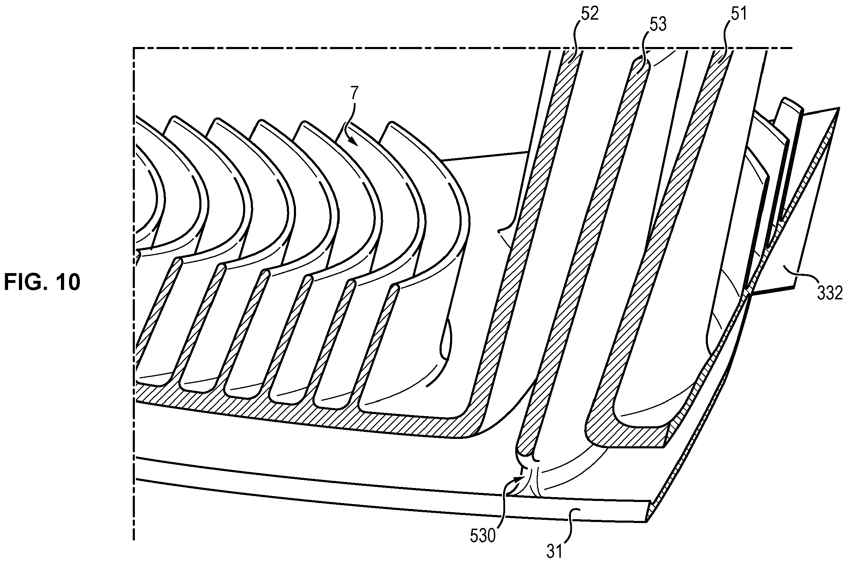

[Fig. 10] est une vue en coupe transversale de l'échangeur, prise selon le plan matérialisé par l'indication P10 en figure 2.

Sur l'ensemble des figures, les éléments similaires portent des références identiques.

### DESCRIPTION DETAILLEE DE L'INVENTION

L'échangeur de chaleur air/fluide 2, conforme à l'invention, va maintenant être décrit plus en détail. Il est destiné à être monté sur la turbomachine 1, au niveau du repère B sur cette même figure, c'est-à-dire en lieu et place d'une partie du carter extérieur 18 délimitant la veine secondaire et des aubes directrices OGV.

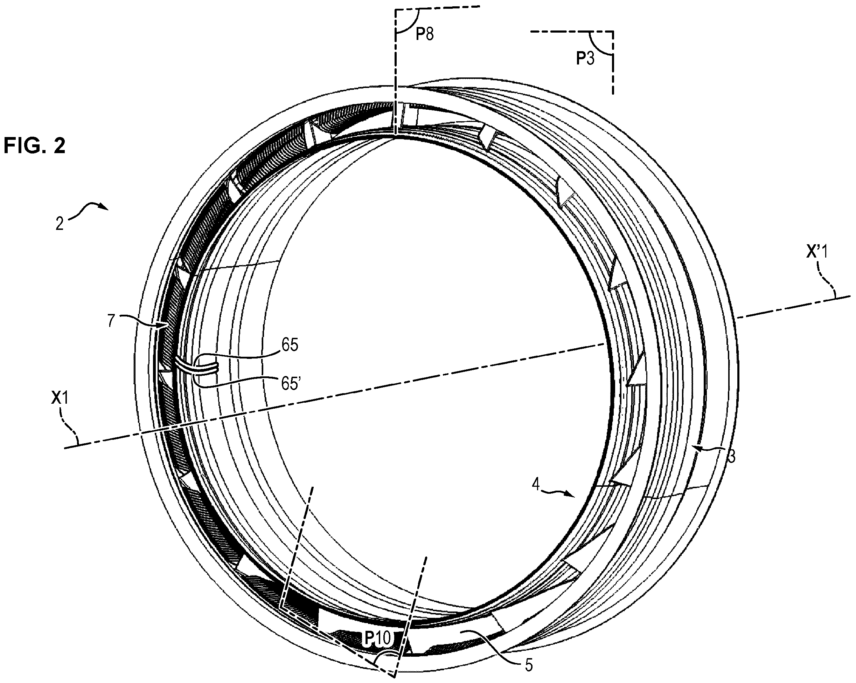

Sur la figure 2, on peut voir que l'échangeur de chaleur 2 comprend une virole externe 3, une virole interne 4 et une série de bras 5 jouant le rôle d'aubes directrices OGV. Dans la suite de la description et des revendications, ces bras 5 seront dénommés « aubes directrices OGV ».

De façon avantageuse, cet échangeur de chaleur comprend également un bec de séparation entre les flux d'air primaire et secondaire.

Plus précisément, la virole externe 3 et la virole interne 4 sont annulaires, coaxiales et concentriques d'axe longitudinal X1-X'1, qui se confond avec l'axe longitudinal X-X' de la turbomachine 1 lorsque l'échangeur de chaleur 2 est en place. Les deux viroles 3 et 4 étant concentriques, la virole interne 4 de plus petit diamètre est disposée à l'intérieur de la virole externe 3. Les aubes directrices OGV 5 relient entre-elles la virole externe 3 et la virole interne 4 et ont un rôle de maintien structurel de ces viroles. Ces aubes 5 s'étendent selon une direction radiale ou sensiblement radiale.

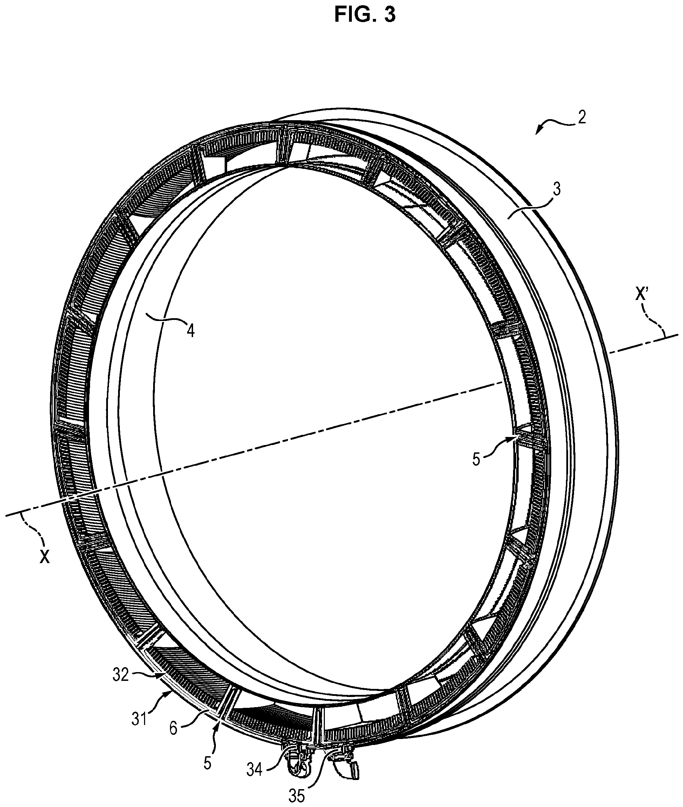

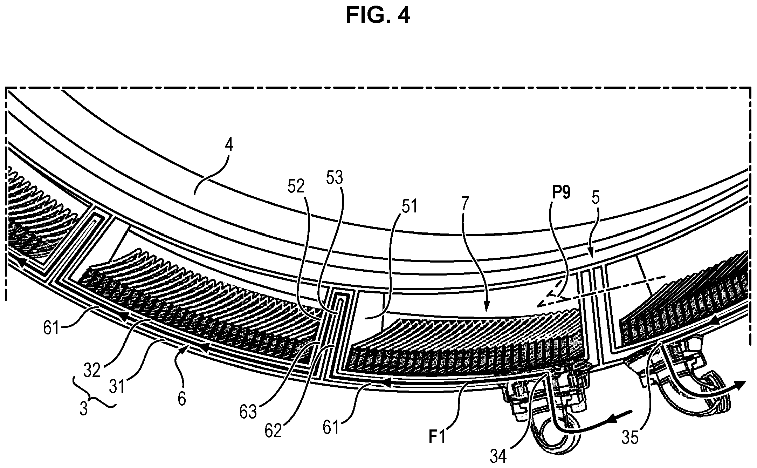

En outre, et comme cela apparaît mieux sur les figures 3 et 4, l'échangeur de chaleur 2 conforme à l'invention comprend un circuit 6 de circulation du fluide à refroidir.

De façon avantageuse, les deux viroles 3 et 4, les aubes directrices OGV 5 et le circuit 6 sont monoblocs, c'est-à-dire qu'ils sont venus de matière et obtenus préférentiellement par un procédé de fabrication additive, notamment un procédé de fusion laser sur lit de poudre.

Comme on peut le voir sur la figure 4, la virole externe 3 est à double paroi, à savoir une paroi extérieure 31 et une paroi intérieure 32. Ces deux parois sont faiblement espacées l'une de l'autre et ménagent entre-elles un premier espace annulaire 61, à l'intérieur duquel le fluide à refroidir peut circuler et qui constitue une partie du circuit 6. Ces parois intérieure 32 et extérieure 31 se rejoignent à l'amont et à l'aval de l'échangeur (par rapport au sens d'écoulement du flux d'air à l'intérieur de la turbomachine), de façon à fermer latéralement le premier espace 61.

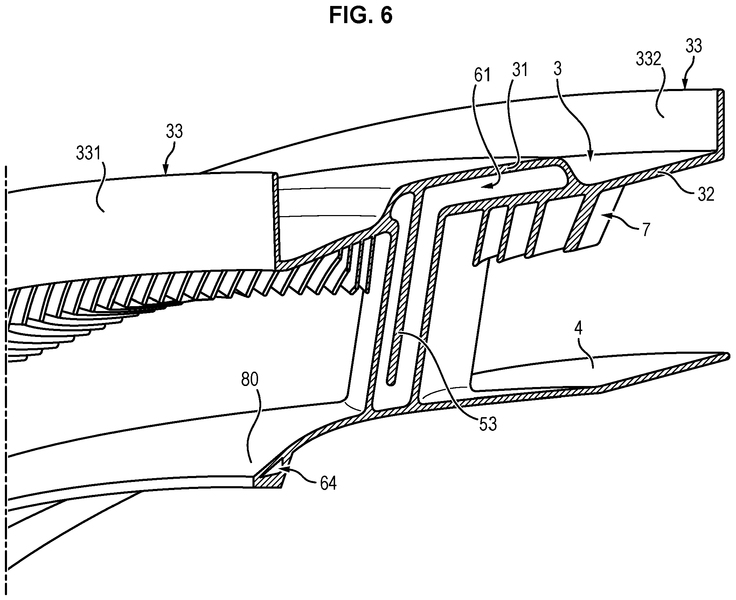

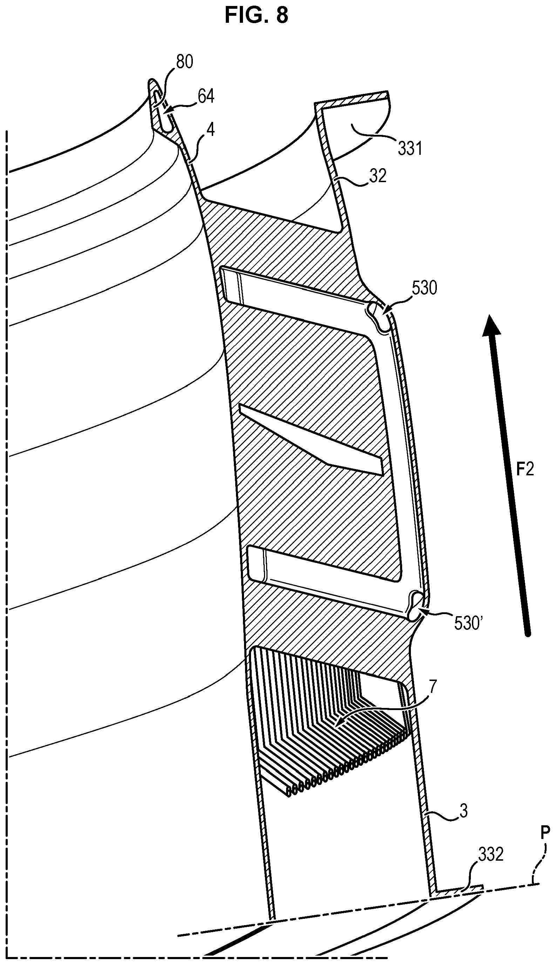

Comme cela apparaît mieux sur les figures 6 et 8, la paroi extérieure 31 peut être moins large que la paroi intérieure 32, de sorte que l'espace 61 n'est formé que sur une partie de la largeur de l'échangeur 2, (la largeur étant mesurée selon la direction axiale de l'échangeur).

De préférence, et comme on peut le voir sur la figure 6, les deux extrémités 33 de la virole externe 3 sont recourbées vers l'extérieur, de façon à former respectivement une bride amont 331 et une bride aval 332. Ces deux brides permettent la fixation de l'échangeur de chaleur 2 sur le carter extérieur de flux secondaire de la turbomachine (par exemple le carter 18 sur la figure 1).

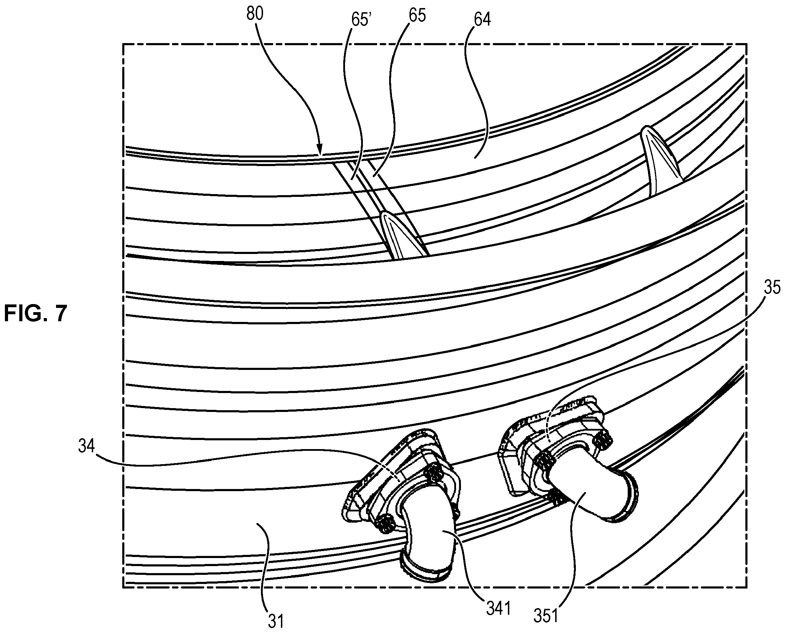

En outre, comme on peut le voir sur la figure 7, la paroi extérieure 31 est traversée par un orifice d'entrée 34 et un orifice de sortie 35 qui débouchent à l'intérieur de l'espace 61 du circuit 6. Deux raccords coudés 341, respectivement 351 peuvent être raccordés sur lesdits orifices de sortie 34, 35. Ils peuvent éventuellement être monobloc avec le reste de l'échangeur mais cela n'est pas obligatoire.

De préférence, et comme cela apparaît mieux sur la figure 4, les orifices d'entrée 34 et de sortie 35 sont ménagés de part et d'autre d'une aube directrice OGV 5 suivant une direction circonférentielle de l'échangeur.

La structure des aubes OGV 5 va maintenant être décrite plus en détail.

Au moins une aube OGV 5 de l'échangeur 2 et de préférence toutes les aubes OGV, comprennent deux cloisons, dites respectivement "première cloison" 51 et "seconde cloison" 52. Chaque cloison 51, 52, relie la paroi intérieure 32 de la virole externe 3 à la virole interne 4.

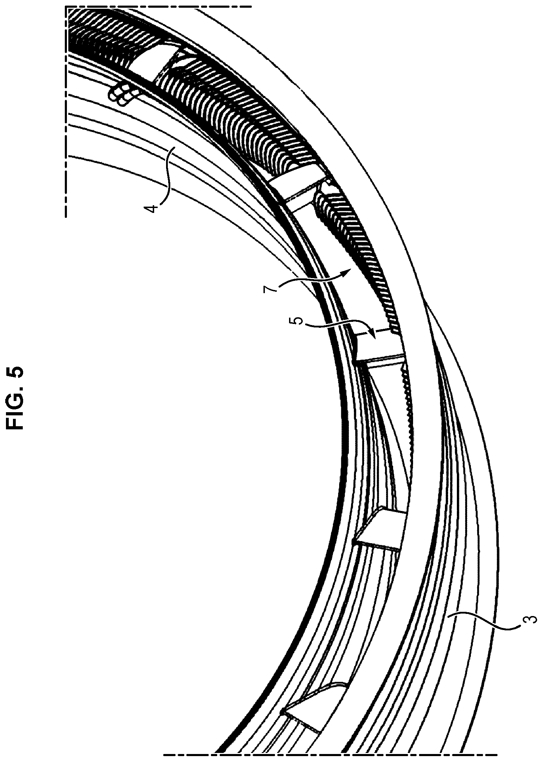

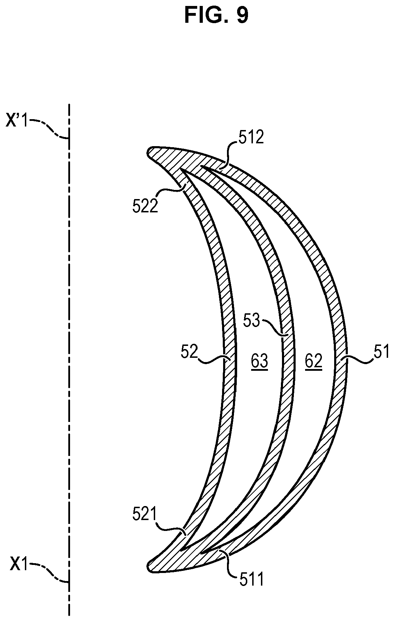

De préférence, et comme cela est davantage visible sur les figures 5 et 9, les première et seconde cloisons 51, 52 sont incurvées par rapport à la direction axiale X1-X'1 de l'échangeur pour guider le flux d'air secondaire circulant entre la virole interne 4 et la virole externe 3 et le redresser après son passage au travers de la soufflante 11.

La première cloison 51 présente une extrémité amont 511 et une extrémité aval 512 et la seconde cloison 52, une extrémité amont 521 et une extrémité aval 522 (par rapport au sens d'écoulement de l'air secondaire).

Les deux extrémités amont 511, 521 se rejoignent et les deux extrémités aval 512, 522 également de façon à fermer l'espace entre les deux cloisons 51, 52.

De préférence, un séparateur intermédiaire 53 est disposé entre la première cloison 51 et la seconde cloison 52. Il s'étend radialement vers l'intérieur de l'échangeur, depuis la paroi extérieure 31 de la virole externe 3 et sur une hauteur inférieure à celle des première et seconde cloisons 51 et 52, de sorte qu'il n'est pas en contact avec la virole interne 4.Ce séparateur 53 est également incurvé dans le même sens et selon le même rayon de courbure que les cloisons 51 et 52 si ces dernières le sont.

Le séparateur 53 s'étend depuis le point de jonction des deux extrémités amont 511, 521 des cloisons 51, 52 jusqu'au point de jonction de leurs deux extrémités aval 512, 522.

Le séparateur intermédiaire 53 joue ainsi le rôle de chicane et délimite avec la première cloison 51, un deuxième espace 62, qui est en communication de fluide avec une partie du premier espace 61 située en amont de l'aube directrice OGV 5 à l'intérieur de laquelle ce séparateur intermédiaire 53 est disposé. Le séparateur 53 délimite également avec la seconde cloison 52, un troisième espace 63, qui se trouve en communication de fluide avec la partie du premier espace 61 située en aval de l'aube directrice OGV 5 à l'intérieur de laquelle ce séparateur intermédiaire 53 est disposé. La notion d'amont et d'aval s'applique ici par rapport au sens de circulation du fluide à refroidir dans le circuit de circulation 6. Le deuxième espace 62 et le troisième espace 63 communiquent entre eux et constituent une partie du circuit 6.

Le trajet de circulation du fluide à refroidir est représenté sur la figure 4 par la flèche F1. Le fluide chaud pénètre dans l'orifice d'entrée 34, circule dans le premier espace 61, s'engage radialement vers l'intérieur dans le deuxième espace 62, contourne le séparateur 53, s'engage radialement vers l'extérieur dans le troisième espace 63 et pénètre dans la portion suivante du premier espace 61. Cette circulation se poursuit jusqu'à ce que le flux ait fait le tour de la circonférence de la virole externe 3 et ressort au travers de l'orifice de sortie 35 après avoir été refroidi.

La virole externe 3 et les aubes directrices OGV 5 offrent ainsi une grande surface pour l'échange de chaleur entre le flux secondaire et le fluide.

De façon avantageuse, l'échangeur de chaleur 2 comprend également une pluralité d'ailettes de refroidissement 7 qui font saillie radialement depuis la paroi intérieure 32 de la virole externe 3, en direction de la virole interne 4. Ces ailettes 7 sont réparties sur au moins une portion de la circonférence de ladite paroi intérieure 31 entre les aubes directrices OGV 5.

La hauteur de ces ailettes 7 est inférieure à celle des aubes directrices OGV 5, de sorte qu'elles ne touchent pas la virole interne 4. De préférence, ces ailettes 7 sont également monobloc avec la paroi intérieure 32 de la virole externe 3.

De préférence, et comme cela est mieux visible sur la figure 5, les ailettes de refroidissement 7 sont également incurvées par rapport à la direction axiale, dans le même sens et selon le même rayon de courbure que les aubes directrices OGV 5, de sorte qu'elles épousent ainsi le contour de celles-ci. Ces ailettes de refroidissement 7 augmentent la surface de contact de la paroi intérieure 32 avec l'air du flux secondaire.

De façon avantageuse, et comme on peut le voir sur la figure 8, l'échangeur de chaleur 2 comprend également un bec 80 de séparation annulaire des flux d'air primaire et secondaire, ce bec est solidaire de l'extrémité amont de la virole interne 4.

De façon avantageuse, le bec 80 est creux de sorte qu'il délimite un quatrième espace 64 qui constitue une partie du circuit de circulation 6 de fluide. Ce quatrième espace 64 annulaire s'étend sur toute la circonférence de la virole interne 4 de l'échangeur 2.

Comme on le voit sur les figures 2 et 7, un conduit additionnel aller 65 et un conduit additionnel retour 65' sont ménagés entre ce quatrième espace 64 et le premier espace 61, de façon à mettre ces deux espaces en communication de fluide. De préférence, ces conduits additionnels 65, 65' débouchent dans l'aube directrice OGV 5 située à côté des deux orifices d'entrée 34 et de sortie 35 du fluide à refroidir (exemple huile) ou entre eux.

Dans ce cas, le fluide qui pénètre dans le quatrième espace 64 à l'état chaud, sert principalement au dégivrage du bec 80, en permettant le réchauffement de celui-ci.

Comme expliqué précédemment, tout l'échangeur de chaleur air/fluide 2 est de préférence monobloc et est de préférence obtenu par fabrication additive par fusion laser sur lit de poudre.

Pour ce faire, l'échangeur de chaleur 2 est fabriqué, couches après couches, à partir d'un support horizontal P, selon un sens de fabrication vertical (représenté par la flèche F2 sur la figure 8).

De préférence et afin d'utiliser le moins possible d'éléments de support, l'échangeur de chaleur 2 est fabriqué en commençant par son extrémité aval (du côté de la bride aval 332) jusqu'à son extrémité amont.

On notera que si l'on choisit de réaliser une virole externe 3 quasiment cylindrique et donc quasiment perpendiculaire au plan de support P et des ailettes 7 formant un angle maximal de 45° par rapport à la verticale, il est possible de fabriquer l'échangeur 2 en limitant le nombre de supports. Seules les aubes directrices OGV 5 ont besoin d'un supportage pendant la fabrication, ce qui simplifie considérablement le processus de fabrication.

L'échangeur pourrait également être fabriqué dans l'autre sens (de l'amont vers l'aval), mais le bec 80 faisant saillie par rapport à la bride amont 331, il faudrait alors supporter cette dernière ou la placer dans le même plan que le bec de séparation 80.

Lorsque l'échangeur 2 est imprimé par la technique de fabrication additive précitée, il reste, au sein de certaines cavités (qui forment le conduit de circulation 6), de la poudre qui n'a pas été durcie par le passage du faisceau laser. Il est donc important de pouvoir dépoudrer la pièce fabriquée, et de vider ces cavités. Il faut donc s'assurer que la poudre puisse sortir de l'échangeur 2 lors du processus de dépoudrage.

Pour ce faire, de façon avantageuse, un premier trou de petite taille 530 dit « trou de dépoudrage » a été prévu au travers du séparateur intermédiaire 53, au niveau du point de jonction de ce séparateur intermédiaire 53 avec la paroi extérieure 31 de la virole externe 3 et les extrémités amont 511, 521 respectives de la première cloison 51 et de la seconde cloison 52, pour que la poudre puisse sortir.

De façon similaire et avantageuse, il est également prévu un second trou de dépoudrage 530' dans le séparateur intermédiaire 53, au niveau du point de jonction de ce séparateur intermédiaire 53 avec la paroi extérieure 31 de la virole externe 3 et les extrémités aval 512, 522 respectives de la première cloison 51 et de la seconde cloison 52.

De préférence, il y a deux trous 530, 530' au niveau de chaque aube directrice OGV 5.

Après la fabrication, on agite l'échangeur de chaleur 2 et on le retourne de façon que la poudre puisse descendre en bas de chaque aube OGV 5 puis sortir par les orifices d'entrée 34 et de sortie 35.

On notera qu'au cours du fonctionnement de l'échangeur, l'huile va emprunter le même chemin que la poudre pendant le dépoudrage. Il y a une partie de l'huile qui va aller tout droit à l'endroit de la séparation 53 et une partie qui va contourner la séparation. Les trous 530, 530' ne s'ouvrent pas sur la paroi externe de l'échangeur de chaleur. Il n'y a donc pas de risque de fuite.

L'échangeur de chaleur 2 peut ensuite être fixé dans une turbomachine, telle que représentée sur la figure 1 en lieu et place d'un tronçon du carter externe 18et des aubes 17 en utilisant notamment les brides amont 331 et aval 332.

## Revendications

1. Echangeur de chaleur air secondaire/fluide (2) pour turbomachine à double flux, comprenant :
une virole externe (3), annulaire, à deux parois, dites respectivement "intérieure" (32) et "extérieure" (31),
une virole interne (4), annulaire, concentrique avec la virole externe (3),
une série d'aubes directrices OGV (5) qui relient ladite virole externe (3) à ladite virole interne (4), au moins l'une desdites aubes directrices OGV (5) possédant deux cloisons, dites respectivement "première cloison" (51) et "seconde cloison" (52) qui se rejoignent à leurs extrémités amont (511, 521) respectives et à leurs extrémités aval (512, 522) respectives,
et un circuit de circulation (6) dudit fluide,
les deux viroles (3, 4) délimitant une veine de flux d'air secondaire, ledit circuit de circulation (6) du fluide étant formé dans l'épaisseur de ladite virole externe (3) entre sa paroi intérieure (32) et sa paroi extérieure (31) et dans l'épaisseur d'au moins l'une desdites aubes directrices OGV (5), ce circuit de circulation (6) débouchant à ses deux extrémités respectives dans un orifice d'entrée (34) et dans un orifice de sortie (35), et l'échange de chaleur s'effectuant entre ledit fluide et l'air secondaire circulant dans la veine secondaire, cet échangeur étant **caractérisé :**
- **en ce qu'**il est fabriqué par fabrication additive, notamment par fabrication additive par fusion laser sur lit de poudre,
- **en ce que** les deux viroles (3, 4), les aubes directrices OGV (5) et le circuit de circulation (6) dudit fluide sont monobloc,
- **en ce que** l'orifice d'entrée (34) et l'orifice de sortie (35) du circuit de circulation (6) du fluide sont formés à travers ladite paroi extérieure (31) de la virole externe (3),
- **en ce qu'**un séparateur intermédiaire (53) fait saillie entre ladite première cloison (51) et ladite seconde cloison (52) depuis la paroi extérieure (31) de la virole externe (3), ce séparateur intermédiaire (53) s'étendant des extrémités amont respectives (511, 521) de la première cloison (51) et de la deuxième cloison (52) jusqu'à leurs extrémités aval respectives (512, 522) et sur une hauteur inférieure à celle desdites cloisons (51, 52), de façon à constituer une chicane qui permet de guider le fluide circulant dans le circuit de circulation, depuis un premier espace (61) situé entre la paroi intérieure et la paroi extérieure de la virole externe, en amont de ladite aube directrice OGV, vers un deuxième espace (62) ménagé entre la première cloison (51) et le séparateur intermédiaire (53) puis vers un troisième espace (63) ménagé entre le séparateur intermédiaire (53) et la seconde cloison (52) et enfin vers une autre partie du premier espace (61) située entre la paroi intérieure et la paroi extérieure de la virole externe, en aval de cette même aube directrice OGV (5), par rapport au sens de circulation du fluide dans ledit circuit de circulation (6) dudit fluide,
- et **en ce que** ce séparateur intermédiaire (53) est monobloc avec la paroi extérieure de la virole externe.

2. Echangeur de chaleur (2) selon la revendication 1, **caractérisé en ce qu'**il comprend une pluralité d'ailettes de refroidissement (7) qui font saillie depuis la paroi intérieure (32) de la virole externe (3) en direction de la virole interne (4), sur une partie seulement de la distance entre cette paroi intérieure (32) et la virole interne (4), ces ailettes de refroidissement (7) étant disposées sur au moins une portion de la circonférence de ladite paroi intérieure (32), entre les aubes directrices OGV (5) et **en ce que** lesdites ailettes de refroidissement (7) sont monobloc avec ladite paroi intérieure (32) de la virole externe (3).

3. Echangeur de chaleur (2) selon la revendication 1 ou 2, **caractérisé en ce que** la première cloison (51) et la seconde cloison (52) des aubes directrices OGV (5) et le séparateur intermédiaire (53) sont incurvés par rapport à la direction axiale de l'échangeur.

4. Echangeur de chaleur (2) selon les revendications 2 et 3, **caractérisé en ce que** les ailettes de refroidissement (7) sont incurvées en direction axiale selon le même profil que les deux cloisons (51, 52) des aubes directrices OGV (5).

5. Echangeur de chaleur (2) selon l'une des revendications précédentes, **caractérisé en ce qu'**il comprend au moins un premier trou dit « de dépoudrage » (530) ménagé dans le séparateur intermédiaire (53,) au niveau du point de jonction de ce séparateur intermédiaire (53) avec la paroi extérieure (31) de la virole externe (3) et les extrémités amont (511, 521) respectives de la première cloison (51) et de la seconde cloison (52) de l'aube directrice OGV (5) et au moins un second trou (530') dit de « dépoudrage », ménagé dans le séparateur intermédiaire (53), au niveau du point de jonction de ce séparateur intermédiaire (53) avec la paroi extérieure (31) de la virole externe (3) et les extrémités aval (512, 522) respectives de la première cloison (51) et de la seconde cloison (52) de l'aube directrice OGV (5).

6. Echangeur de chaleur (2) selon l'une des revendications précédentes, **caractérisé en ce qu'**il comprend un bec de séparation (80) annulaire, monobloc avec l'extrémité amont circulaire de la virole interne (4) et destiné à séparer le flux d'air secondaire et un flux d'air primaire circulant dans ladite turbomachine à double flux et **en ce que** ledit bec de séparation (80) est creux et délimite un quatrième espace (64) qui constitue une portion du circuit de circulation (6) du fluide.

7. Echangeur de chaleur (2) selon l'une des revendications précédentes, **caractérisé en ce que** les deux extrémités amont et aval de la virole externe (3) sont repliées vers l'extérieur de l'échangeur de façon à former une bride amont de fixation (331) et une bride aval de fixation (332).

8. Echangeur de chaleur (2) selon l'une des revendications précédentes, **caractérisé en ce que** le fluide est de l'huile de lubrification.

9. Turbomachine à double flux, **caractérisée en ce qu'**elle comprend un échangeur de chaleur air secondaire/fluide (2) selon l'une quelconque des revendications précédentes, **en ce que** la virole externe (3) et la virole interne (4) de cet échangeur de chaleur sont fixées respectivement à un carter externe et à un carter interne de ladite turbomachine qui ensemble délimitent la veine de flux secondaire de ladite turbomachine à double flux et **en ce que** l'orifice d'entrée (34) et l'orifice de sortie (35) du circuit de circulation (6) du fluide sont raccordés à une source de fluide à refroidir de ladite turbomachine.

10. Procédé de fabrication de l'échangeur de chaleur air secondaire/fluide (2) selon l'une quelconque des revendications 1 à 8, **caractérisé en ce que** cet échangeur de chaleur air secondaire/fluide (2) est fabriqué par fabrication additive par fusion laser sur lit de poudre.

## Patentansprüche

1. Bypassluft/Fluid-Wärmetauscher (2) für ein Doppelstrom Turbomaschine, umfassend:
einen ringförmigen Außenring (3) mit zwei Wänden, die jeweils als "Innenring" (32) und "Außenring" (31) bezeichnet werden,
einen ringförmigen, mit dem Außenring (3) konzentrischen Innenring (4),
eine Reihe von OGV-Leitschaufeln (5), die den Außenring (3) mit dem Innenring (4) verbinden, wobei mindestens eine der OGV-Leitschaufeln (5) zwei Trennwände besitzt, die jeweils als "erste Trennwand" (51) und "zweite Trennwand" (52) bezeichnet werden, die sich an ihren jeweiligen oberstromigen Enden (511, 521) und an ihren jeweiligen unterstromigen Enden (512, 522) treffen,
und einen Zirkulationskreislauf (6) für das Fluid,
wobei die beiden Ringe (3, 4) einen Bypassluftstromkanal begrenzen, wobei der Fluidzirkulationskreis (6) in der Dicke des Außenrings (3) zwischen seiner Innenwand (32) und seiner Außenwand (31) und in der Dicke von mindestens einer der OGV-Leitschaufeln (5) ausgebildet ist, wobei dieser Zirkulationskreis (6) an seinen beiden jeweiligen Enden in eine Eingangsöffnung (34) und in eine Ausgangsöffnung (35) mündet, und der Austausch der Wärme zwischen dem Fluid und der Bypassluft stattfindet, die im Bypass-Kanal zirkuliert, wobei dieser Tauscher **dadurch gekennzeichnet ist, dass**:
- er durch additive Fertigung, insbesondere durch additive Fertigung mittels Laserschmelzen auf einem Pulverbett hergestellt wird,
- die beiden Ringe (3, 4), die OGV-Leitschaufeln (5) und der Fluid-Zirkulationskreis (6) einstückig sind,
- die Einlassöffnung (34) und die Auslassöffnung (35) des Fluid-Zirkulationskreises (6) durch die Außenwand (31) des Außenrings (3) ausgebildet sind,
- ein Zwischentrenner (53) zwischen der ersten Trennwand (51) und der zweiten Trennwand (52) ab der Außenwand (31) des Außenrings (3) vorsteht, wobei sich dieser Zwischentrenner (53) von den jeweiligen stromaufwärtigen Enden (511, 521) der ersten Trennwand (51) und der zweiten Trennwand (52) bis zu ihren jeweiligen stromabwärtigen Enden (512, 522) und über eine Höhe erstreckt, die kleiner ist als die der Trennwände (51, 52), so dass sie einen Deflektor bilden, der es ermöglicht, das im Zirkulationskreis zirkulierende Fluid von einem ersten Raum (61), der sich zwischen der Innenwand und der Außenwand des Außenrings stromaufwärts von der OGV-Leitschaufel befindet, zu einem zweiten Raum (62) zu leiten, der zwischen der ersten Trennwand (51) und dem Zwischentrenner (53) ausgebildet ist, dann zu einem dritten Raum (63), der zwischen dem Zwischentrenner (53) und der zweiten Trennwand (52) ausgebildet ist, und schließlich zu einem anderen Teil des ersten Raums (61), der sich zwischen der Innenwand und der Außenwand des Außenrings befindet, stromabwärts von derselbigen OGV-Leitschaufel (5), in Bezug auf die Zirkulationsrichtung des Fluids in dem Fluid-Zirkulationskreis (6),
- und dass dieser Zwischentrenner (53) mit der Außenwand des Außenrings einstückig ist.

2. Wärmetauscher (2) nach Anspruch 1, **dadurch gekennzeichnet, dass** er eine Vielzahl von Kühlrippen (7) umfasst, die ab der Innenwand (32) des Außenrings (3) in Richtung des Innenrings (4) nur über einen Teil des Abstands zwischen dieser Innenwand (32) und dem Innenring (4) vorstehen, wobei diese Kühlrippen (7) auf mindestens einem Abschnitt des Umfangs der Innenwand (32) zwischen den OGV-Leitschaufeln (5) angeordnet sind, und dass die Kühlrippen (7) mit der Innenwand (32) des Außenrings (3) einstückig sind.

3. Wärmetauscher (2) nach Anspruch 1 oder 2, **dadurch gekennzeichnet, dass** die erste Trennwand (51) und die zweite Trennwand (52) der OGV-Leitschaufeln (5) und der Zwischentrenner (53) in Bezug auf die axiale Richtung des Tauschers gekrümmt sind.

4. Wärmetauscher (2) nach den Ansprüchen 2 und 3, **dadurch gekennzeichnet, dass** die Kühlrippen (7) in axialer Richtung gemäß demselben Profil gekrümmt sind wie die beiden Trennwände (51, 52) der OGV-Leitschaufeln (5) .

5. Wärmetauscher (2) nach einem der vorhergehenden Ansprüche, **dadurch gekennzeichnet, dass** er mindestens ein erstes, als "Entstäubungsloch" bezeichnetes Loch (530) umfasst, das im Zwischentrenner (53) im Bereich der Verbindungsstelle dieses Zwischentrenners (53) mit der Außenwand (31) des Außenrings (3) und den jeweiligen stromaufwärtigen Enden (511, 521) der ersten Trennwand (51) und der zweiten Trennwand (52) der OGV-Leitschaufel (5) ausgebildet ist, und mindestens ein zweites, als "Entstäubungsloch" bezeichnetes Loch (530'), das im Zwischentrenner (53) im Bereich der Verbindungsstelle dieses Zwischentrenners (53) mit der Außenwand (31) des Außenrings (3) und den jeweiligen stromabwärtigen Enden (512, 522) der ersten Trennwand (51) und der zweiten Trennwand (52) der OGV-Leitschaufel (5) ausgebildet ist.

6. Wärmetauscher (2) nach einem der vorhergehenden Ansprüche, **dadurch gekennzeichnet, dass** er eine ringförmige Trenndüse (80) umfasst, die mit dem kreisförmigen stromaufwärtigen Ende des Innenrings (4) einstückig und dazu bestimmt ist, den Bypassluftstrom und einen primären Luftstrom, der in der Doppelstrom-Turbomaschine zirkuliert, zu trennen, und dass die Trenndüse (80) hohl ist und einen vierten Raum (64) begrenzt, der einen Abschnitt des Fluid-Zirkulationskreises (6) bildet.

7. Wärmetauscher (2) nach einem der vorhergehenden Ansprüche, **dadurch gekennzeichnet, dass** die beiden stromaufwärts und stromabwärts gelegenen Enden des Außenrings (3) zur Außenseite des Wärmetauschers hin derart gebogen sind, dass sie einen stromaufwärtigen Befestigungsflansch (331) und einen stromabwärtigen Befestigungsflansch (332) bilden.

8. Wärmetauscher (2) nach einem der vorhergehenden Ansprüche, **dadurch gekennzeichnet, dass** das Fluid Schmieröl ist.

9. Doppelstrom-Turbomaschine, **dadurch gekennzeichnet, dass** es einen Bypassluft/Fluid-Wärmetauscher (2) nach einem der vorhergehenden Ansprüche umfasst, dass der Außenring (3) und der Innenring (4) dieses Wärmetauschers jeweils an einem Außengehäuse und an einem Innengehäuse der Turbomaschine befestigt sind, die zusammen den Bypassluftkanal der Turbomaschine begrenzen, und dass die Einlassöffnung (34) und die Auslassöffnung (35) des Fluid-Zirkulationskreises (6) mit einer Quelle des zu kühlenden Fluids der Turbomaschine verbunden sind.

10. Verfahren zur Herstellung des Bypassluft/Fluid-Wärmetauschers (2) nach einem der Ansprüche 1 bis 8, **dadurch gekennzeichnet, dass** dieser Bypassluft/Fluid-Wärmetauscher (2) durch additive Fertigung mittels Laserschmelzen auf einem Pulverbett hergestellt wird.

## Claims

1. A secondary air/fluid heat exchanger (2) for a bypass turbomachine, comprising:
an outer ring (3), annular, with two walls, respectively known as "inner" (32) and "outer" (31),
an inner ring (4), annular, concentric with the outer ring (3),
a series of OGV guide vanes (5) connecting said outer ring (3) to said inner ring (4), at least one of said OGV guide vanes (5) having two partitions, respectively called "first partition" (51) and "second partition" (52) which meet at their respective upstream ends (511, 521) and at their respective downstream ends (512, 522),
and a circuit (6) for circulating said fluid,
the two rings (3,4) delimit a secondary air path, said fluid-circulating circuit (6) being formed in the thickness of said outer ring (3) between its inner wall (32) and its outer wall (31) and in the thickness of at least one of said OGV guide vanes (5), this circulating circuit (6) opening at both its respective ends into an inlet orifice (34) and into an outlet orifice (35), and the heat exchange taking place between said fluid and the secondary air circulating in the secondary air path, this exchanger being **characterized:**
- **in that** it is is manufactured by additive manufacturing, in particular by additive manufacturing by powder-bed laser fusion,
- **in that** the two rings (3,4), the OGV guide vanes (5) and the circulating circuit (6) of said fluid are integral,
- **in that** the inlet orifice (34) and the outlet orifice (35) of the fluid-circulating circuit (6) are formed through said outer wall (31) of the outer ring (3),
- **in that** an intermediate separator (53) protrudes between said first partition (51) and said second partition (52) from the outer wall (31) of the outer ring (3), this intermediate separator (53) extending from the respective upstream ends (511, 521) of the first partition (51) and of the second partition (52) all the way to their respective downstream ends (512, 522) and over a height less than that of said partitions (51, 52), in such a way as to form a chicane which makes it possible to guide the fluid circulating in the circulating circuit from a first space (61) located between the inner wall and the outer wall of the outer ring, upstream of said OGV guide vane, toward a second space (62) fashioned between the first partition (51), and the intermediate separator (53), then toward a third space (63) fashioned between the intermediate separator (53) and the second partition (52) and finally toward another part of the first space (61) located between the inner wall and the outer wall of the outer ring, downstream of this same OGV guide vane (5), with respect to the direction of circulation of the fluid in said circulating circuit (6) of said fluid,
- and **in that** this intermediate separator (53) is integral with the outer wall of the outer ring.

2. The heat exchanger (2) as claimed in claim 1, **characterized in that** it comprises a plurality of cooling tabs (7) which protrude from the inner wall (32) of the outer ring (3) in the direction of the inner ring (4), over only a part of the distance between this inner wall (32) and the inner ring (4), these cooling tabs (7) being disposed over at least a portion of the circumference of said inner wall (32), between the OGV guide vanes (5) and **in that** said cooling tabs (7) are integral with said inner wall (32) of the outer ring (3).

3. The heat exchanger (2) as claimed in claim 1 or 2, **characterized in that** the first partition (51) and the second partition (52) of the OGV guide vanes (5) and the intermediate separator (53) are curved with respect to the axial direction of the exchanger.

4. The heat exchanger (2) as claimed in claims 2 and 3, **characterized in that** the cooling tabs (7) are curved in the axial direction according to the same profile as the two partitions (51, 52) of the OGV guide vanes (5).

5. The heat exchanger (2) as claimed in one of the preceding claims, **characterized in that** it comprises at least a first so-called "depowdering" hole (530) fashioned in the intermediate separator (53) at the level of the junction point of this intermediate separator (53) with the outer wall (31) of the outer ring (3) and the respective upstream ends (511, 521) of the first partition (51) and of the second partition (52) of the OGV guide vane (5) and at least a second so-called "depowdering" hole (530') fashioned in the intermediate separator (53) at the level of the junction point of this intermediate separator (53) with the outer wall (31) of the outer ring (3) and the respective downstream ends (512, 522) of the first partition (51) and of the second partition (52) of the OGV guide vane (5).

6. The heat exchanger (2) as claimed in one of the preceding claims, **characterized in that** it comprises an annular forward fairing (80), integral with the circular upstream end of the inner ring (4) and intended to separate the secondary air flow and a primary air flow circulating in said bypass turbomachine and **in that** said forward fairing (80) is hollow and delimits a fourth space (64) constituting a portion of the fluid-circulating circuit (6).

7. The heat exchanger (2) as claimed in one of the preceding claims, **characterized in that** the two upstream and downstream ends of the outer ring (3) are folded back toward the outside of the exchanger in such a way as to form an upstream attachment flange (331) and a downstream attachment flange (332).

8. The heat exchanger (2) as claimed in one of the preceding claims, **characterized in that** the fluid is lubrication oil.

9. A bypass turbomachine, **characterized in that** it comprises a secondary air/fluid heat exchanger (2) as claimed in any of the preceding claims, **in that** the outer ring (3) and the inner ring (4) of this heat exchanger are respectively attached to an outer casing and to an inner casing of said turbomachine which together delimit the secondary flow path of said bypass turbomachine and **in that** the inlet orifice (34) and the outlet orifice (35) of the fluid-circulating circuit (6) are connected to a source of fluid to be cooled of said turbomachine.

10. A method for manufacturing the secondary air/fluid heat exchanger (2) as claimed in any of claims 1 to 8, **characterized in that** this secondary air/fluid heat exchanger (2) is manufactured by additive manufacturing by powder-bed laser fusion.
